# FASCICULE DE BREVET EUROPEEN

(11) **EP 0 746 481 B1**
(45) Date de publication et mention de la délivrance du brevet: **11.08.1999**
(21) Numéro de dépôt: 95940295.9
(22) Date de dépôt: 09.11.1995
(51) Int. Cl.: B60R 7/06

(54) **RECEPTACLE POUR OBJETS, DESTINE, NOTAMMENT, A CONSTITUER UN VIDE-POCHES, UNE BOITE A GANTS OU EQUIVALENT, AU NIVEAU NOTAMMENT, D'UNE PLANCHE DE BORD**
LAGERBEHÄLTER FÜR GEGENSTÄNDE, INSBESONDERE ABLAGEFACH, HANDSCHUHKASTEN ODER DERGLEICHEN ZUM EINBAU IN EINEM ARMATURENBRETT
CONTAINER FOR OBJECTS, PROVIDING A STORAGE SPACE SUCH AS A GLOVE COMPARTMENT IN A DASHBOARD

(30) Priorité: 15.12.1994 FR 9415355
(43) Date de publication de la demande: 11.12.1996
(73) Titulaire: PLASTIC OMNIUM AUTO INTERIEUR, 69007 Lyon (FR)
(72) Inventeur: CHOQUET, Alain, F-59147 Gondecourt (FR)
(74) Mandataire: Duthoit, Michel
(86) Numéro de dépôt international: FR9501479
(87) Numéro de publication internationale: WO9618525

(56) Documents cités:
- DE-B- 2 549 071
- GB-A- 961 469
- US-A- 2 298 415
- PATENT ABSTRACTS OF JAPAN vol. 7 no. 16 (M-187) [1161] ,22 Janvier 1983 & JP,A,57 172843 (SUZUKI JIDOSHA) 23 Octobre 1982,

## Description

La présente invention concerne un réceptacle pour objets, destiné, notamment, à constituer un espace de rangement dans un véhicule tel que, par exemple, un videpoches, une boîte à gants ou équivalent, au niveau, notamment, d'une planche de bord (cf. par exemple US-A- 2 298 415, correspondant au préambule de la revendication indépendante 1). Elle concerne également un procédé de fabrication par moulage de planche de bord présentant un tel réceptacle pour objets.

La présente invention trouvera donc son application, notamment, dans le domaine des équipements pour passagers de véhicules.

Toutefois, de telles applications ne sont pas limitatives et l'invention pourra être utilisée dans tous les secteurs de l'activité économique dans lesquels on est amené à rencontrer des boîtes, coffres, housses ou autres pour ranger des objets de taille, de forme ou de fonction diverses.

Actuellement, les réceptacles pour objets tels que vide-poches, boîte à gants, ou équivalent, sont constitués par une coque en matériau rigide prévue à l'arrière de la planche de bord d'un véhicule.

Les planches de bord servant également, notamment, à dissimuler différents éléments tels que, par exemple, des gaines de câbles électriques, des dispositifs de ventilation ou autres, dont l'encombrement est fixé par un cahier des charges, lesdits réceptacles présentent une forme complexe, munis de nombreuses réservations, aptes à laisser libre un espace pour ces éléments. De tels réceptacles offrent donc un volume intérieur réduit qui empêche souvent de ranger des objets, même de petite taille.

Un autre inconvénient réside dans leur difficulté de réalisation. En effet, la définition des réservations nécessite des moules aux formes complexes. De plus, afin de ne pas risquer de sortir du gabarit limité par les autres éléments présents sous la planche de bord, ce qui empêcherait le montage, des jeux supplémentaires sont prévus diminuant d'autant le volume intérieur.

Enfin, la coque étant rigide, les exigences du démoulage obligent à limiter volontairement le volume que pourrait occuper le réceptacle derrière les réservations, dans la direction de démoulage.

De plus, la rigidité du réceptacle rend sonore tout contact avec les corps placés derrière la planche susceptibles d'entrer en interférence pendant la durée de vie du produit.

Le but de la présente invention est de proposer un réceptacle pour objets ainsi qu'un procédé de fabrication par moulage de planche de bord présentant un tel réceptacle qui pallient les inconvénients précités et permettent de faciliter le rangement des objets.

Un autre but de la présente invention est de proposer un réceptacle pour objets ainsi qu'un procédé de fabrication par moulage de planche de bord présentant un tel réceptacle qui soient compatibles avec les autres éléments également présents derrière la planche de bord.

Un autre but de la présente invention est de proposer un réceptacle pour objets ainsi qu'un procédé de fabrication par moulage de planche de bord présentant un tel réceptacle dont la réalisation et le montage soient aisés afin de diminuer le temps de cycle.

Un autre but de la présente invention est de proposer un réceptacle pour objets ainsi qu'un procédé de fabrication par moulage de planche de bord présentant un tel réceptacle qui permettent des changements de gammes rapides.

Un autre but de la présente invention est de proposer un réceptacle dont le poids soit limité.

Un autre but de la présente invention est de proposer un réceptacle dont l'aspect esthétique soit amélioré.

Un autre but de la présente invention est de proposer un réceptacle dont l'espace intérieur puisse être facilement éclairé.

D'autres buts et avantages de la présente invention apparaîtront au cours de la description qui va suivre qui n'est donnée qu'à titre indicatif et qui n'a pas pour but de la limiter.

La présente invention concerne un réceptacle pour objets, destiné, notamment, à constituer un espace de rangement dans un véhicule tel que, par exemple, un vide-poches, une boîte à gants ou équivalent, au niveau, notamment, d'une planche de bord, ledit réceptacle étant délimité par un ensemble de faces définissant une ouverture, caractérisé par le fait qu'il comporte un squelette de rigidification et qu'au moins une desdites faces est constituée d'au moins un matériau déformable.

La présente invention concerne également un procédé de fabrication par moulage de planche de bord présentant un tel réceptacle pour objets, destiné, notamment, à constituer un espace de rangement dans un véhicule tel que, par exemple, un vide-poches, une boîte à gants ou équivalent, ledit réceptacle étant délimité par des faces définissant une ouverture, dans lequel :
- on prévoit un squelette de rigidification dudit réceptacle,
- on moule simultanément la planche de bord et le squelette de rigidification,
- on constitue au moins une desdites faces par au moins un matériau déformable.

L'invention sera mieux comprise si l'on se réfère à la description suivante ainsi qu'aux dessins en annexe qui en font partie intégrante.

La figure 1 est une vue en perspective d'un exemple de réalisation d'un réceptacle conforme a l'invention, prévu, selon ledit exemple, derrière une planche de bord également représentée, le réceptacle pour objets et la planche de bord étant figurés de manière éclatée.

La figure 2 est une vue de coupe, suivant une direction longitudinale, qui illustre le principe de coopération de l'exemple de réceptacle, représenté à la figure 1, avec d'autres éléments également présents derrière une planche de bord d'un véhicule.

La figure 3 est une vue de coupe, semblable à la figure 2, qui illustre le principe de déformation d'une des faces de l'exemple de réceptacle représenté sous l'effet d'un objet qu'il contient.

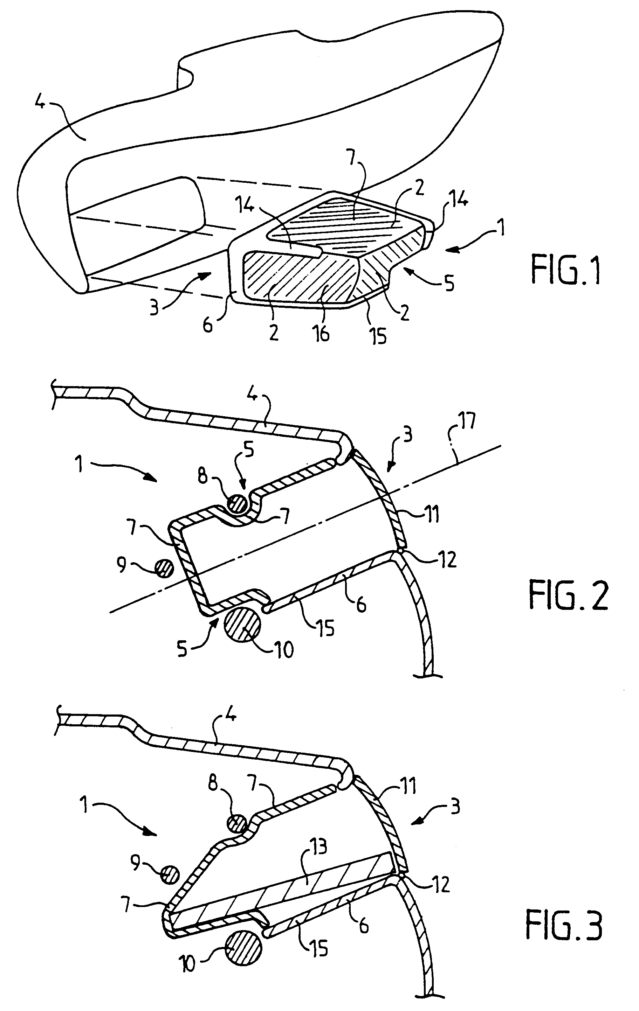

La figure 1 illustre un exemple de réalisation d'un réceptacle 1 pour objets conforme à l'invention. Il est délimité par un ensemble de faces 2, par exemple quadrangulaires, définissant une ouverture 3.

Le réceptacle 1 est prévu, notamment, sur un support fixe lié à un véhicule, tel que, par exemple, à l'arrière d'une planche de bord 4. Selon cet exemple d'application, il est muni, par exemple, de réservations 5 qui laissent libre des espaces pour d'autres éléments également présents derrière la planche de bord d'un véhicule.

Selon l'invention, le réceptacle 1 comporte un squelette 6 de rigidification. De plus, au moins une desdites faces 2 est constituée d'un matériau déformable 7.

Comme représenté à la figure 2, le caractère déformable de certaines des faces 2 du réceptacle 1 conforme à l'invention permet de contourner, après montage, par exemple, des éléments extérieurs 8-10 comme, notamment, dans le cas d'une application à des planches de bord 4 de véhicules, des gaines pour câbles électriques, des dispositifs de ventilation ou autres, également présents derrière la planche de bord 4.

Le volume intérieur du réceptacle 1 est ainsi augmenté par rapport au volume que présenterait un réceptacle à coque rigide. En effet, dans le cas de l'élément extérieur repéré 8, les exigences de démoulage d'un réceptacle à coque rigide correspondant à celui conforme à l'invention ne permettrait pas de retrouver la même section intérieure derrière l'élément extérieur 8.

De plus, l'utilisation d'un matériau 7 déformable permet de réduire les jeux de montage, les faces 2 qu'il constitue pouvant épouser le contour des éléments extérieurs 8-10 et par leur souplesse de ne pas créer de bruit dans le cas d'une éventuelle interférence avec les éléments 8-10 placés derrière la planche.

Selon un exemple de réalisation, l'ouverture 3 est obturée, par exemple, par une porte 11, notamment articulée autour d'une charnière 12. D'autres dispositifs de fermeture, tels que celui fonctionnant selon le principe d'un contenant basculant autour d'un axe du tue "huche à pain", peuvent également être envisagés.

Si l'on se reporte maintenant à la figure 3, on constate que le réceptacle 1 conforme à l'invention permet de ranger des objets 13 plus grands que ceux qui auraient pu l'être dans un réceptacle à coque rigide correspondant, sauf à laisser la porte 11 ouverte. En effet, selon l'invention, certaines des faces 2 étant déformables, celles-ci sont étirées entre les éléments extérieurs 9, 10. Pour cela, le matériau 7 qui les constitue présente des propriétés de résistance, notamment, au déchirement et à la perforation.

Selon un mode particulier de réalisation, le squelette 6 de rigidification du réceptacle 1 comprend des cornières 14, ou similaires, définissant, au moins partiellement, des arêtes audit réceptacle 1. Il peut être, par exemple, formé par au moins une desdites faces 2, constituant une paroi 15 rigide du réceptacle 1.

Il s'agit, par exemple, de la face 2 sur laquelle les objets reposent sous l'effet de la gravité.

Ledit squelette peut aussi être constitué par une combinaison de ces techniques ou par d'autres systèmes de rigidification tels que crochets supérieurs, bretelles de suspension.

Le squelette 6 de rigidification peut comprendre en outre, par exemple, des tiges aptes à renforcer la structure du réceptacle 1 en des points sensibles, autres que les arêtes.

Selon un exemple de réalisation, le matériau déformable 7 est un matériau élastique et/ou textile. Il peut être éventuellement décoré ou, s'il n'est pas en zone visible, constitué de matière recyclable. Sa légèreté permet un gain en poids avantageux dans les applications liées au domaine du transport.

En ce qui concerne le matériau du squelette 6 de rigidification, il s'agit, notamment, de polypropylène éventuellement recouvert d'une peau constituée, par exemple, de polychlorure de vinyl ou de polypropylène (TPO).

Selon un exemple particulier de réalisation, les faces 2 déformables sont constituées par une housse 16, assujettie au squelette 6 de rigidification. Il s'agit, par exemple, d'une fixation par collage.

Selon un autre mode de réalisation, les moyens de fixation de la housse 16 sur le squelette 6 de rigidification sont amovibles. Ceci permet à l'usager de changer l'aspect esthétique du réceptacle 1 à volonté et de la coordonner ainsi, par exemple, à l'habillage intérieur du véhicule. De plus, ceci permet, lors de la production, de faciliter les changements de gammes.

Selon l'invention, un des matériaux déformables 7 est, par exemple, translucide. Ainsi, au moins une des faces 2 et/ou au moins une partie d'une face 2 présente une zone translucide. De ce fait, il n'est plus nécessaire de prévoir un dispositif d'éclairage au niveau des parois du réceptacle 1. En effet, une source de lumière disposée, à l'extérieur, en regard de la zone translucide suffit. Ceci permet de faciliter la conception et la réalisation du réceptacle 1 conforme à l'invention.

Le matériau translucide peut, par exemple, être transparent.

La présente invention concerne également un procédé de fabrication par moulage de planche de bord 4 présentant un réceptacle 1 tel que décrit ci-dessus. Selon ce procédé, on prévoit un squelette 6 de rigidification dudit réceptacle 1 et on moule, par exemple, par injection, simultanément la planche de bord 4 et le squelette 6 de rigidification. De plus, on constitue au moins une des faces 2 délimitant le réceptacle 1 par au moins un matériau 7 déformable.

Le squelette 6 de rigidification, par exemple constitué par des cornières 14, ou similaires, et/ou des parois rigides 15, est oriente, par exemple, suivant une direction 17 qui est la direction de démoulage.

La fabrication par moulage de planche de bord 4 présentant un réceptacle 1, rapporté par sous-moulage, peut également être envisagée.

On peut aussi mouler séparément la planche de bord 4 et le squelette de rigification 6 qui comprend alors un cadre rigide autour d'une ouverture 3, ledit cadre étant muni d'orifices coopérant avec des moyens de fixation prévus sur l'arrière de la planche de bord 4.

Naturellement, d'autres mises en oeuvre de la présente invention, à la portée de l'homme de l'art, auraient pu être envisagées sans pour autant sortir du cadre de la présente demande.

## Revendications

1. Réceptacle (1) pour objets, destiné notamment à constituer un espace de rangement dans un véhicule tel que, par exemple, un vide-poches, une boîte à gants ou équivalent, au niveau, notamment, d'une planche de bord, ledit réceptacle étant délimité par un ensemble de faces (2) définissant une ouverture (3), caractérisé par le fait qu'il comporte un squelette (6) de rigidification et qu'au moins une desdites faces (2) est constituée d'un matériau déformable (7).

2. Réceptacle (1) selon la revendication 1, caractérisé par le fait que le squelette (6) de rigidification comprend des cornières (14) définissant, au moins partiellement, des arêtes dudit réceptacle (1).

3. Réceptacle (1) selon la revendication 1, caractérisé par le fait que le squelette (6) de rigidification comprend au moins une desdites faces (2), constituant une paroi (15) rigide dudit réceptacle (1).

4. Réceptacle (1) selon la revendication 1, caractérisé par le fait que le matériau déformable (7) est un matériau élastique.

5. Réceptacle (1) selon la revendication 1, caractérisé par le fait que le matériau déformable (7) est un matériau textile.

6. Réceptacle (1) selon la revendication 1, caractérisé par le fait que les faces (2) déformables sont constituées par une housse (16), assujettie au squelette (6) de rigidification.

7. Réceptacle (1) selon la revendication 1, caractérisé par le fait qu'au moins un des matériaux déformables (7) est translucide.

8. Procédé de fabrication par moulage de planche de bord (4) présentant un réceptacle (1) pour objets, selon la revendication 1, destiné, notamment à constituer un espace de rangement dans un véhicule tel que, par exemple, un vide-poches, une boîte à gants ou équivalent, ledit réceptacle (1) étant délimité par des faces (2) définissant une ouverture (3), dans lequel :
- on prévoit un squelette (6) de rigidification dudit réceptacle (1),
- on moule simultanément la planche de bord (4) et le squelette (6) de rigidification,
- on constitue au moins une desdites faces (2) par au moins un matériau (7) déformable.

9. Procédé de fabrication par moulage de planche de bord (4), selon la revendication 8, caractérisé par le fait que le squelette (6) de rigidification est orienté suivant la direction (17) de démoulage.

## Claims

1. Receptacle (1) for objects intended, in particular, to form a storage space in a vehicle such as, for example, a glove compartment or the like, in the area, in particular, of a dashboard, the said receptacle being delimited by a number of faces (2) defining an opening (3), characterised by the fact that it comprises a bracing framework and that at least one of the said faces (2) is constituted by a deformable material (7).

2. Receptacle (1) according to claim 1, characterised by the fact that the bracing framework (6) includes angle-pieces (14) defining, at least partially, the edges of the said receptacle (1).

3. Receptacle (1) according to claim 1, characterised by the face that the bracing framework (6) includes at least one of the said faces (2) constituting a rigid wall (15) of the said receptacle (1).

4. Receptacle according to claim 1, characterised by the fact that the deformable material (7) is an elastic material.

5. Receptacle (1) according to claim 1, characterised by the fact that the deformable material (7) is a textile material.

6. Receptacle (1) according to claim 1, characterised by the fact that the deformable faces (2) are constituted by a cover (16) secured to the bracing framework (6).

7. Receptacle (1) according to claim 1, characterised by the fact that at least one of the deformable materials (7) is translucent.

8. Process for manufacturing, by moulding, a dashboard (4) having a receptacle (1) for objects, according to claim 1, intended, in particular, to form a storage space in a vehicle such as, for example, a glove compartment or the like, the said receptacle (1) being delimited by faces (2) defining an opening (3), wherein :
- there is provided a framework (6) for bracing the said receptacle (1);
- the dashboard (4) and the bracing framework (6) are moulded simultaneously;
- at least one of the said faces (2) is constituted by at least one deformable material (7).

9. Process for manufacturing a dashboard (4) by moulding, according to claim 8, characterised by the fact that the bracing framework (6) is orientated in the direction (17) of stripping from the mould.

## Patentansprüche

1. Behälter (1) für Gegenstände, nämlich zum Bilden eines Ablageraums in einem Fahrzeug, wie z.B. eines Ablagefaches, eines Handschuhfaches oder dergleichen, nämlich im Bereich eines Instrumentenbretts, wobei der genannte Behälter von einem, eine Öffnung (3) definierenden Flächensatz (2) begrenzt ist, dadurch gekennzeichnet, daß er ein Versteifungsgerippe (6) umfaßt und daß wenigstens eine der genannten Flächen (2) aus einem verformbaren Material (7) besteht.

2. Behälter (1) nach Anspruch 1, dadurch gekennzeichnet, daß das Versteifungsgerippe (6) Winkeleisen (14) umfaßt, die wenigstens teilweise Kanten des genannten Behälters (1) definieren.

3. Behälter (1) nach Anspruch 1, dadurch gekennzeichnet, daß das Versteifungsgerippe (6) wenigstens eine der genannten Flächen umfaßt, die eine starre Wand (15) des genannten Behälters (1) bildet.

4. Behälter (1) nach Anspruch 1, dadurch gekennzeichnet, daß das verformbare Material (7) ein elastisches Material ist.

5. Behälter (1) nach Anspruch 1, dadurch gekennzeichnet, daß das verformbare Material (7) ein Textilmaterial ist.

6. Behälter (1) nach Anspruch 1, dadurch gekennzeichnet, daß die verformbaren Flächen (2) aus einer am Versteifungsgerippe (6) befestigten Hülle (16) bestehen.

7. Behälter (1) nach Anspruch 1, dadurch gekennzeichnet, daß wenigstens eines der verformbaren Materialien (7) durchscheinend ist.

8. Verfahren zur Herstellung durch Spritzgießen eines Instrumentenbretts (4), das einen Behälter (1) für Gegenstände nach Anspruch 1, nämlich zum Bilden eines Ablageraums in einem Fahrzeug, wie z.B. eines Ablagefaches, eines Handschuhfaches oder dergleichen, aufweist, wobei der genannte Behälter von eine Öffnung (3) definierenden Flächen (2) begrenzt ist, bei dem
- ein Versteifungsgerippe (6) für den genannten Behälter (1) vorgesehen wird,
- das Instrumentenbrett (4) und das Versteifungsgerippe (6) gleichzeitig geformt werden,
- wenigstens eine der genannten Flächen (2) aus wenigstens einem verformbaren Material (7) gebildet wird.

9. Verfahren zur Herstellung durch Spritzgießen eines Instrumentenbretts (4), nach Anspruch 8, dadurch gekennzeichnet, daß das Versteifungsgerippe (6) in der Richtung (17) der Herausnahme aus der Gußform orientiert ist.
